Europäisches Patentamt

European Patent Office

Office européen des brevets

(11) Publication number: **0 434 277 B1**

# EUROPEAN PATENT SPECIFICATION

(45) Date of publication of patent specification: **20.09.95**  (51) Int. Cl.6: **B29C 49/14**, B29C 49/64

(21) Application number: **90313444.3**

(22) Date of filing: **11.12.90**

(54) **Manufacture of thermoplastic tubular articles.**

(30) Priority: **15.12.89 GB 8928351**

(43) Date of publication of application:
**26.06.91 Bulletin 91/26**

(45) Publication of the grant of the patent:
**20.09.95 Bulletin 95/38**

(84) Designated Contracting States:
**DE FR GB NL**

(56) References cited:
EP-A- 0 052 490
EP-A- 0 072 064
WO-A-85/01011
GB-A- 2 099 358

**PATENT ABSTRACTS OF JAPAN, vol. 5, no. 172 (M-95)[844], 31st October 1981; & JP-A-56 098 123 (SHOWA DENSEN DENRAN) 07-08-1981**

**PATENT ABSTRACTS OF JAPAN, vol. 4, no. 108 (M-24)[590], 5th August 1980; & JP-A-55 067 408 (HIDEO WATASE) 21-05-1980**

(73) Proprietor: **CarnaudMetalbox plc**
**Woodside**
**Perry Wood Walk**
**Worcester WR5 1EO (GB)**

(72) Inventor: **Brooks, David Williams**
**3 Whitehorse Crescent**
**Grove,**
**Wantage,**
**Oxfordshire OX12 0PY (GB)**
Inventor: **Chapman, Roger Charles**
**Crag Side Farm, Dick Lane**
**Cowling**
**West Yorkshire BD22 0JZ (GB)**
Inventor: **Callan, Maurice Simon**
**"Ouarrenden" 12 Grundys Lane**
**Malvern Wells,**
**Worcester WR14 4MS (GB)**
Inventor: **Watson, Martin John**
**38 Mandarin Place**
**Grove,**
**Wantage,**
**Oxfordshire OX12 0OH (GB)**

(74) Representative: **Driver, Virginia Rozanne et al**
**Page White & Farrer**
**54 Doughty Street**
**London WC1N 2LS (GB)**

**Description**

This invention relates to the manufacture of thermoplastic tubular articles, particularly but not exclusively to the manufacture of tubular articles of saturated linear polyester material such as polyethylene terepthalate (PET), intended to form the bodies of processable food and beverage containers.

It is known in the manufacture of such articles that a high degree of orientation of the container body is desirable for improving its mechanical properties. This can be induced by mechanical deformation such as drawing, stretching or stretch-blow-moulding of the thermoplastic material.

A method and apparatus for forming biaxially oriented tubular articles by stretch-blow-moulding are described in our British Publication No. 2089276A. In that method continuously extruded hollow tube is drawn and blown to orient it, a can-sized length at a time and the oriented tube is chopped off. The present invention is concerned with the manufacture of biaxially oriented articles from discrete lengths of plastic tube.

The present inventors have found that in the manufacture of long (approx. 2m) biaxially oriented articles from PET by stretch-blow-moulding several initiation sites may occur along the length of the article, each initiation site being a zone from which radial and axial expansion of the material propagates. This results in the distribution of polymer material in the finished article being uneven.

The inventors were particularly concerned with the problem of producing long articles which could then be severed to form the bodies of can-like containers. For this purpose the articles had to be produced repeatably with consistent characteristics along their lengths, particularly as regards their diameter, wall thickness, orientation and crystalline properties. Hereto, there has not been available a process which would enable the necessary quality control conditions to be met consistently and repeatably in mass production.

According to one aspect of the present invention there is provided a method of manufacturing a thermoplastic tubular article from a hollow elongate parison of an orientable polymer material in the manufacture of open-ended container bodies, which comprises gripping end portions of the preform to define between them a central portion from which the article is to be formed, and moving the end portions apart whilst admitting gas at a controlled pressure to the interior of the preform, such movement and admission of gas causing the central portion to be biaxially oriented by simultaneous elongation and radial expansion of its polymer material, characterised in that prior to its biaxial orientation the polymer material of the central portion is heated to above its glass transition temperature and so as to produce in the central portion a temperature gradient which extends, without discontinuities, between the ends of the central portion, the elongation and the radial expansion of the central portion to achieve biaxial orientation being thereby each initiated at the higher temperature end of the central portion and proceeding progressively and simultaneously as an expansion front which moves along the central portion from its higher temperature end to its lower temperature end.

In the preferred embodiment, the preform is made of PET and the tubular article to be made from it is approximately 2 metres in length. The temperature difference between the ends of the central portion is then at least 3°C and preferably about 5°C.

The inventors have discovered that by providing a controlled temperature differential between the ends of the preform and by controlling air pressure (in dependence on the polymer), long articles of a very uniform wall thickness and with consistent material qualities can be produced repeatably. It is preferred that both the elongation and the radial expansion of the central portion should exceed the "natural stretch ratio" of the polymer material, that is to say, the stretch ratio at which substantial strain hardening with rapid crystallisation and formation of network chains occurs in the polymer material. By achieving high levels of biaxial orientation such high stretch ratios confer desirable physical properties on the finished article.

By thus causing the central portion to be expanded and elongated to beyond its natural stretch ratio in both the radial and longitudinal directions, as it moves progressively along the central portion beginning at the higher temperature end the expansion front of the central portion is accompanied by a moving boundary of work hardening, referred to as a work hardened front, which is formed in the polymer material. The inventors have discovered that for consistent wall thickness of the biaxially orientated material the extent and speed of the separation of the gripped end portions (and therefore the rate of extension of the central portion) should be so matched to the initial length of the central portion and to the speed of propagation of the work hardened front that the work hardened front reaches the lower temperature end of the central portion at substantially the same time as the movement of the gripped ends is completed and the required stretch ratio of the polymer material in its longitudinal direction is achieved. In the described embodiment a biaxially oriented article of approximately 2m long is formed from a preform approximately 1m in length, the speed of propagation of the work hardened front being approximately $4ms^{-1}$ and the speed of separation of the gripped ends being approximately $2ms^{-1}$.

It is preferred that during the biaxial orientation of the central portion its higher temperature end is held stationary, and its lower temperature end is moved away from the higher temperature end longitudinally of the preform. It is furthermore preferred for the pressurised gas to be admitted through only the higher temperature end of the preform.

UK patent Publication No. 2099358 describes a method for making thermoplastics articles from a length of elongate tube, in which a central portion of the tube is stretched by gripping devices engaged with the tube ends and simultaneously or subsequently is radially expanded by pressurised gas. Differential heating of the central portion is discussed, but there is no disclosure in 2099358 of the simultaneous stretching and radial expansion of the central portion when at a temperature above its glass transition temperature and with a continuously (i.e. monotonically) varying temperature difference between its ends.

At volume 5, No. 172 (M-95) (844) of Patent Abstracts of Japan there is described, in relation to Japanese patent Publication 56-98123, a method of forming articles from vinyl chloride tubes. The tube is heated to softening temperature and with its ends closed is located within a mould. One end of the mould is then cooled, and pressurised air is admitted to the interior of the tube, so causing the tube to expand radially into conformity with the mould, starting at the uncooled end.

It will be understood that the articles produced by the process of this Japanese Patent Abstract will be unelongated and so will be orientated only in the circumferential direction. They will therefore not be suited for use as a container bodies. Furthermore, because it relies upon thermal conduction along the tube, the method of generating the temperature gradient described is wholly unsuited to the manufacture of articles in large quantities and at high rates of production.

At Volume 4, No. 108 (M-24) (590) of Patent Abstracts of Japan there is desribed, in relation to Japanese patent Publication 55-067408, a method of intitiating expansion and extension of a thermoplastics pipe by thinning it mechanically at a required initiation point by physical contact with a member such as a pin. Such an arrangement, however, would be unsatisfactory in the production of container bodies because it would leave irregularities or surface blemishes at the area of contact of the thermoplastics material with the member. Moreover, there is no disclosure that a single initiation site is provided at one end of the tube, from which elongation and radial expansion proceed simultaneously to the other end.

The thermoplastics materials which are preferred for use in the process of the present invention are those having well-defined natural stretch ratios. The preferred material is a polyester homopolymer, which consists of polymer units derived from ethylene terephthalate, produced from terephthalic acid plus ethylene glycol (PET). Other suitable materials include polyester copolymers which consist of polymer units based on ethylene terephthalate, produced from terephthalic acid, isophthalic acid, plus ethylene glycol, diethylene glycol, cyclohexane dimethanol but could also include other polyesters or copolyesters including poly (ethylene isophthalate) PEI, poly (ethylene napthalene-dicarboxylate) PEN., or polyester or copolyester blends.

The present invention is suitable for use with monolayer preforms but may also be used for multilayer preforms, for example those having coextruded structures of PET with a gas barrier material such as an ethylene vinyl alcohol copolymer or a polyamide copolymer.

The invention further contemplates apparatus for carrying out the method defined above, and from another aspect accordingly provides an apparatus for producing a thermoplastic tubular article from a hollow elongate preform of an orientable polymer material which comprises:-

a) first and second spaced gripping means (13, 14) for gripping respective end portions of the preform so as to define a central portion of the preform from which the article is to be formed;

b) heating means (4) for heating the preform;

c) drive means (15) operable on the gripping means with the heated preform held thereby to move the gripping means apart longitudinally of the preform; and

d) gas pressure supply means (19) effective to supply gas at a controlled pressure to the interior of the heated preform during the operation of the drive means whereby the polymer material of the central portion is biaxially orientated by simultaneous elongation and radial expansion;

characterised in that the heating means comprises means for differentially heating the central portion along its length whereby the polymer material of the central portion is heated to above its glass transition temperature, and whereby there is produced in the central portion a temperature gradient which extends, without discontinuities, between the ends of the central portion.

Advantageously, the heating means is an oven through which the preform is carried along a predetermined path, the oven having a plurality of parallel elongate nozzles arranged adjacent the predetermined path and by which heated gas is directed onto the preform, the nozzles being differentially closed off so as in combination to create the said temperature gradient on the preform.

3

For a better understanding of the present invention and to show how the same may be carried into effect reference will now be made by way of example to the accompanying drawings, in which:-

Figure 1 is a block diagram of apparatus for manufacturing thermoplastic articles;

Figure 2 is a plan view of the oven (with the top removed) used for heating the preform;

Figure 3 is diagrammatic section through a preform showing its relationship to heating nozzles;

Figure 4 is a diagram showing the layout of the nozzles and the baffle arrangement;

Figures 5(a) to 5(f) are diagrams illustrating steps in the manufacturing process;

Figures 6(a) and 6(b) are graphs showing an exemplary temperature profile applied to the preforms;

Figure 7 is a graph showing the degree of orientation of articles manufactured using the method described herein;

Figure 8 is a graph showing the degree of crystallinity of articles manufactured using the method described herein;

Figure 9 is a graph of the diameters of articles manufactured using the method described herein;

Figure 10 is a graph of the wall thicknesses of articles manufactured using the method described herein.

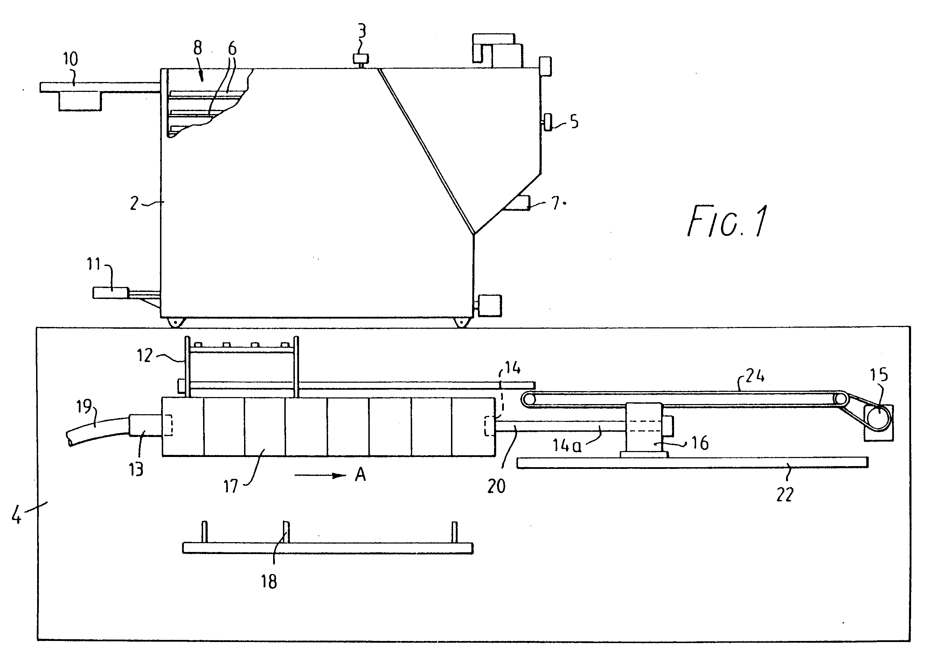

The apparatus comprises a hot air oven 2 mounted above a stretch/blow station 4. The oven 2 has associated therewith a tube supply device 10 which sequentially supplies preforms in the form of elongate tubes to preform trays 6 of a carrier 8. The preforms are hollow extruded tubes made of PET or another suitable polymer and having a length of about 1m. The carrier 8 has a plurality of vertically spaced preform trays. The carrier 8 moves stepwise to carry preforms vertically downwards through the hot air oven 2 wherein they are heated. An air heater 7 heats the air for the oven while thermocouples 3, 5 monitor the temperature. The construction of the oven 2 will be described in more detail hereinafter. A tube transfer device 12 transfers the tube from the oven to the stretch/blow station 4 where it is supported by a "static" gripper 13 at one end of a mould 17 and a "stretch" gripper 14 carried from the axially opposite end of the mould 17. The corresponding ends of the preform are termed the "static" end and the "stretch" end. The static gripper 13 is so-called because apart from moving a short distance back and forth to collect and grip an incoming tube it remains substantially in the same position. The static gripper 13 has a hollow gripper head permitting the supply of air from an air supply hose 19. The heads of the grippers 13,14 are not visible in Figure 1 as they are within the mould. The mould 17 comprises two halves, one of which can be seen in Figure 1, which are locked together once the preform is in place.

The stretch gripper 14 can be moved axially to the right in Figure 1 under the control of a drive unit 16 movable on a track 22 driven by a nylon belt 24 which in turn is driven by the servomotor 15. The servomotor 15 is controlled by a dedicated motion controller (not shown) to move a stretch rod 20 attached to the stretch gripper 14 to a preset position at a preset velocity once blowing has commenced. The dedicated motion controller is preprogrammed with operational conditions depending on the requirements of the stretch/blow process and the specification of the product. Finally, a transfer device 18 is operable to remove the blown container from the mould 17.

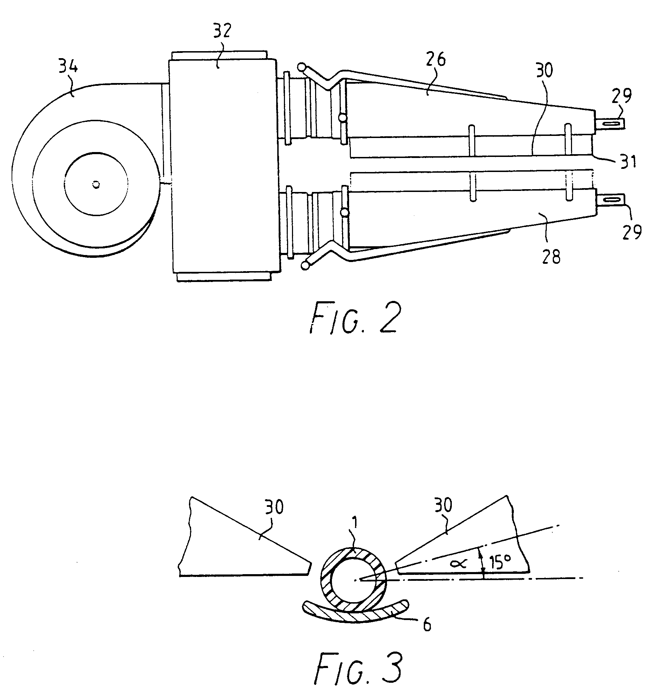

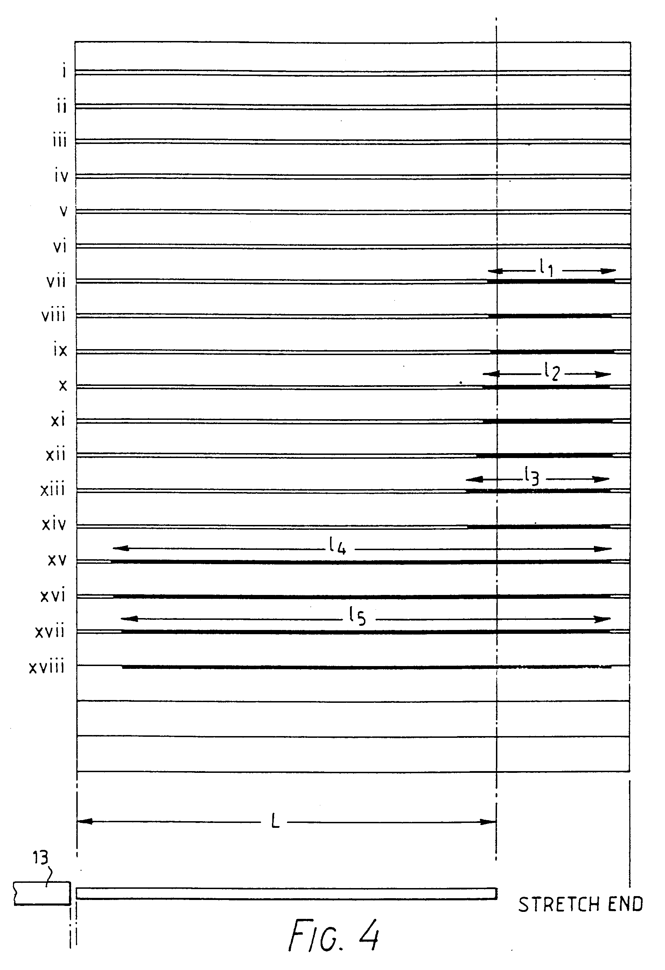

Referring now to Figures 2 to 4, the oven 2 comprises two chambers 26, 28 each having a plurality of nozzles 30 having an elongate opening 31 through which heated air issues and being spaced apart vertically of the chambers 26, 28 (Figure 4). The nozzles 30 are fed from a common plenum chamber 32 via a recirculating air heating system 34. The nozzles 30 are arranged to direct heated air into respective preforms carried by the preform trays 6. In the described embodiment there are eighteen vertically spaced nozzles 30 in each of the chambers 26, 28. The chambers 26, 28 are hinged to the common chamber 32 of the oven to allow access to the nozzles 30 by an operator of the oven, and can be locked by a locking mechanism 29 when in use.

It is important for the preform to lie correctly in its tray 6 both in relation to the flow of heated air and its longitudinal position relative to the nozzle opening. Figure 3 shows a suitable tray with a preform 1 thereon. As can be seen from Figure 3, the nozzles 30 are preferably set at an angle $\alpha = 15°$ to the horizontal, so that the heated air flows on or above the centre line of the preform 1. The preform 1 is then not forced off the preform tray 6. It is important that each preform is positioned in the same axial position on the preform tray as it moves through the oven, and the air flow must be such that it does not disturb the preforms.

Figure 4 shows the layout of the heating nozzles 30 (numbered i to xviii) in the chamber 26 of the oven 2. The nozzles heat the preform as it is indexed through the oven by the carrier 8 so that there is a temperature differential between the opposite end regions of the preform. This is accomplished by selectively blocking parts of some of the elongate nozzles to prevent hot air from being emitted from these parts. This can be achieved by a suitable baffle arrangement. In Figure 4, the lengths illustrated with a thick black line are lengths of the nozzles which are blocked:

Nozzles numbered i to vi are completely open; nozzles numbered vii to ix have a length $l_1$ blocked off; nozzles numbered x to xii have a length $l_2$ $l_1$, blocked off; nozzles xiii and xiv have a length $l_3$ $l_2$ $l_1$; nozzles

xv, xvi have a length of $l_4$ $l_3$ blocked off and nozzles xvii, xviii have a length $l_5$ where $l_3$ $l_5$ $l_4$. For a preform length L of 810 mm, these lengths are as follows:

$$l_1 = 15 \text{ mm}$$
$$l_2 = 20 \text{ mm}$$
$$l_3 = 30 \text{ mm}$$
$$l_4 = 760 \text{ mm}$$
$$l_5 = 735 \text{ mm}$$

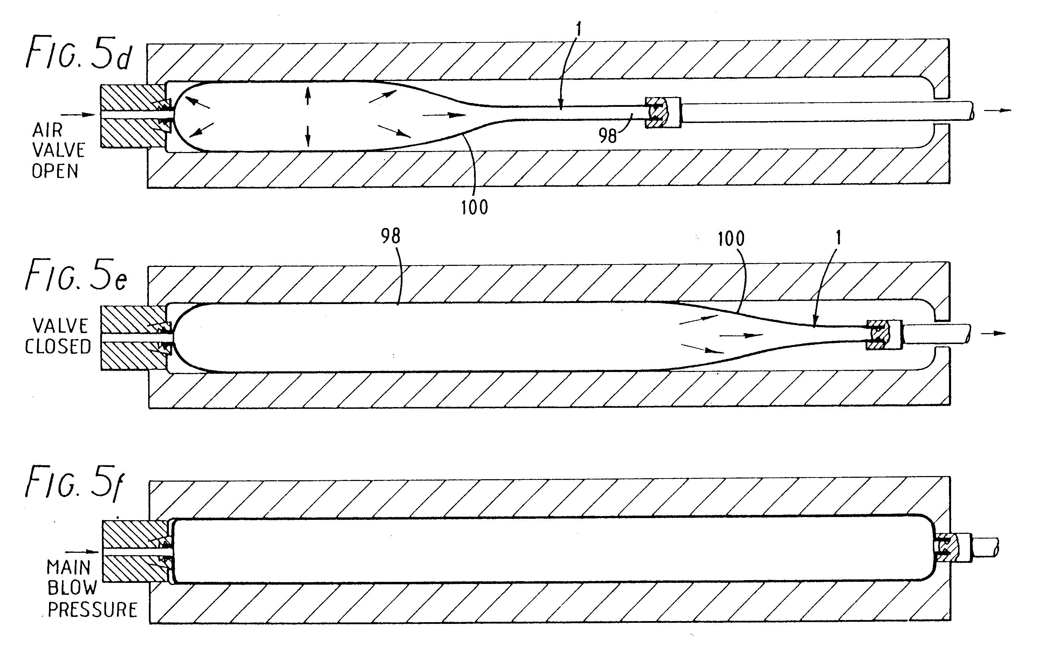

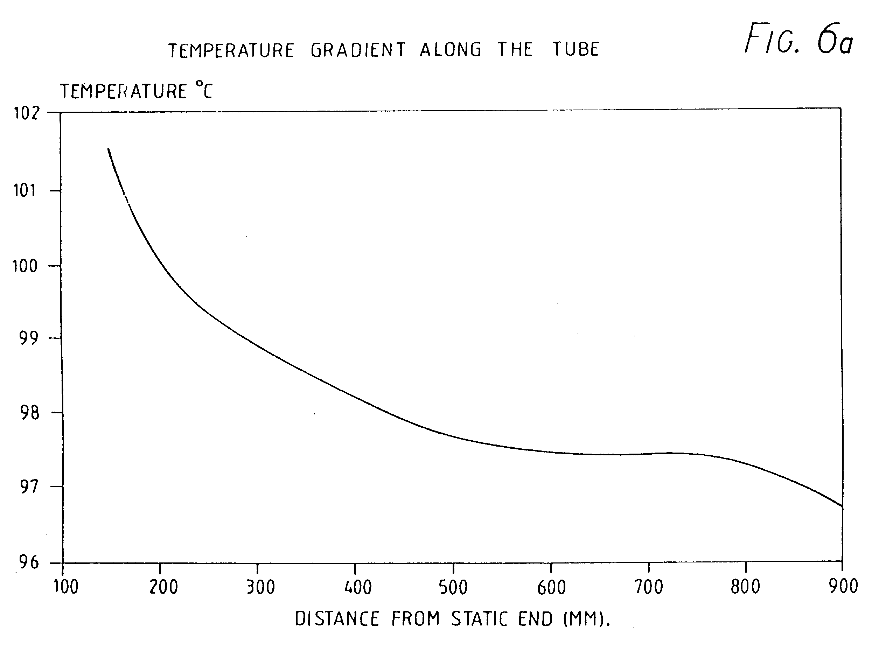

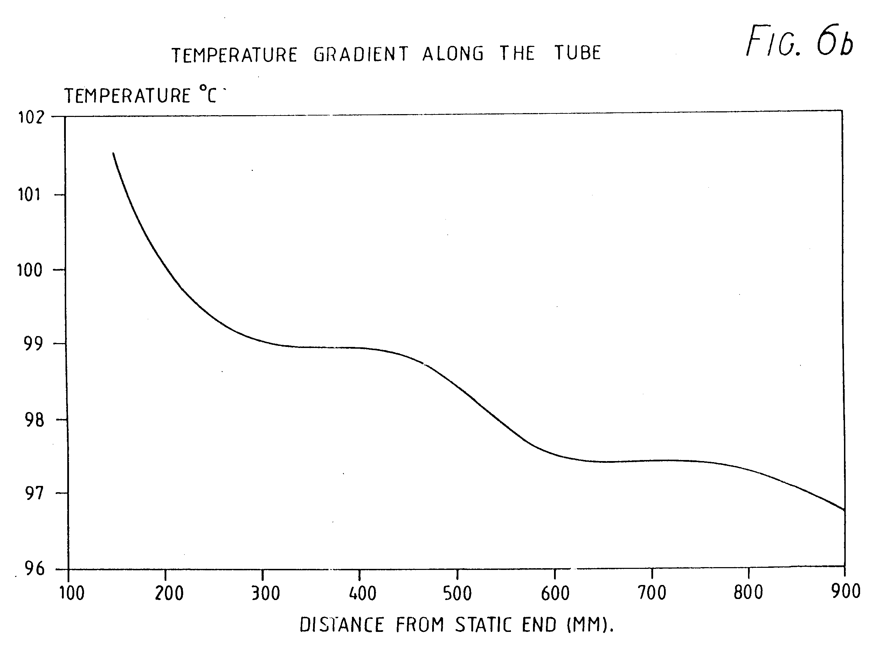

The result of this is to heat the static end of the preform to a higher temperature than the stretch end of the preform, and to impart a temperature profile such as that shown in Figure 6a or 6b. The preform remains in the oven for a sufficient length of time to ensure that an approximately uniform temperature exists through the wall thickness of the tube, and it will be appreciated from Figs 6a and 6b that the whole of the tube is at a temperature above the glass transition temperature of the PET material.

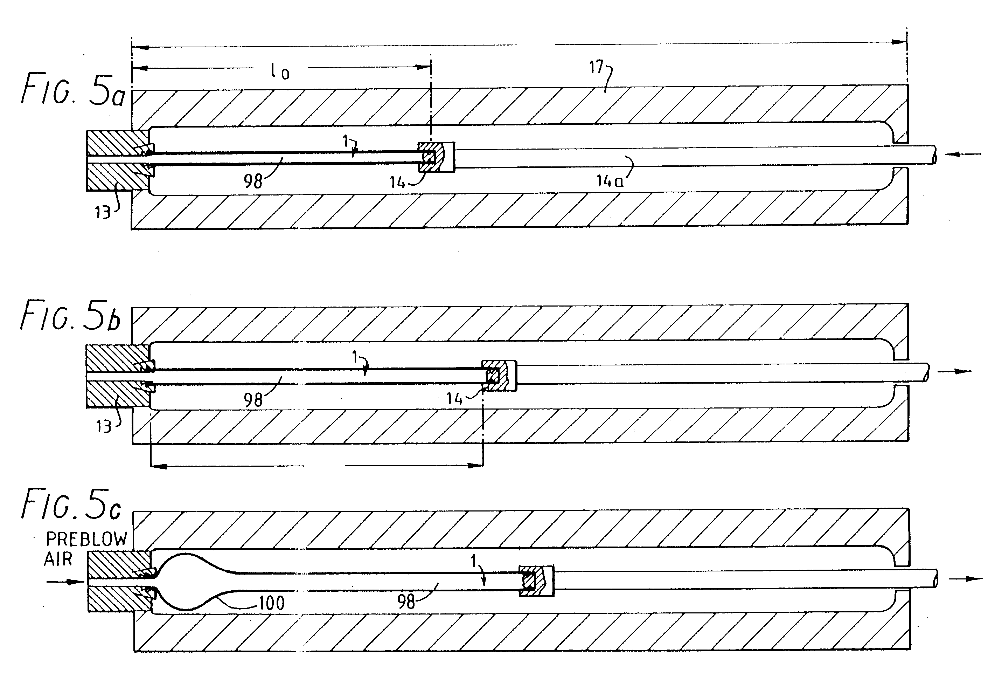

Reference will now be made to Figures 5a to 5f to describe a method of manufacturing thermoplastics articles which are biaxially oriented. Although the method will be described in relation to a single preform, it will be apparent that the apparatus is capable of operating with a continuous supply of preforms. That is, the tube supply device 10 sequentially supplies preforms to respective preform trays 6 of the carrier 8. These preform trays 6 are indexed through the oven 2, in time to ensure that a preform exiting from the oven has the correct temperature profile. As an example, the dwell time of a preform in the oven 2 might be about four minutes. The dwell time is controlled by the indexing speed of the carrier 8. The preform trays 6 support the preforms over their entire length. Indexing of the carrier is controlled by a machine controller (not shown) in response to the mechanical and pneumatic movement in the stretch/blow station, as discussed hereinbelow.

A preform 1 in the form of a discrete length of tube of a suitable plastics material, for example polyethylene terepthalate (PET) and having a length of about a metre is heated in the hot air oven in such a manner as to differentially heat it along its length to create a temperature profile therealong, for example as illustrated in Figure 6a or 6b, as described above. The preform 1 is transferred from the oven 2 to the stretch/blow station 4 where it is retained by being secured by the grippers 13, 14 at respective ends of the preform (Figure 5a). The part of the preform lying between the grippers is denoted 98 throughout Fig 5. The mould halves of the mould 17 close around the preform 1 and are locked in position. The gripper head 14 is moved by a short distance (to the right in Figures 1 and 5) and applies a pretensioning force of 200N, for example, to the preform (Figure 5b). This prevents the preform from sagging and prepares it for the ensuing stretch/blow process.

The end of the preform secured by the gripper head 14 is sealed by a closure within the gripper head 14. Pressurised air is introduced into the other end of the preform via the hose 19 (Figure 5c). The mould can be at room temperature or, preferably, cooled to around 15°C. Introduction of the pressurised air into the preform causes the static, higher temperature end of the part 98 of the preform to begin to expand radially and simultaneously to undergo axial elongation, as manifest by an expansion front 100 (Figs 5c to 5e). A work hardened front of expanded material develops in the polymer on this expansion front and moves with it. The axial elongation characteristics of the preform depend on the temperature profile achieved in the oven 4, and on the air pressure, and will be described in more detail hereinafter. The axial and hoop stretch induced by the pressurised air serves to orient the PET. To aid the axial elongation the gripper head 14 is moved very quickly to the right (Figure 5d) by the stretch rod mechanism 15, i.e. at a velocity at least in excess of $1 \text{ms}^{-1}$, and generally between 2 and $4 \text{ms}^{-1}$. The stretch rod mechanism can be activated with introduction of the preblow air, or a short time thereafter to allow for initiation of the work hardened front. The delay can lie between 0.01 and 0.15 sec. The actual stretch rate depends on the process conditions, the material of the preform and the respective sizes of the preform and finished article.

The relationship between the stretch rate, the stretch ratio and the preblow period is given by the following equation:

$$\lambda_1 = 1 + \frac{\Delta}{L_o} t \qquad ----(1)$$

$\lambda_1$ is the desired axial stretch ratio in the finished article.

$\Delta = \frac{d\lambda}{dt}$ is the stretch rate.

t = preblow period

$L_o$ is the initial length of the preform.

(1) An example using typical values for these parameters is given below:

$$t = 0.3 \quad \lambda_1 = 2.2 \quad \Delta = 4 \text{ ms}^{-1} \quad L_o = 1\text{m}$$

The expansion front and work hardened front move progressively along the preform until they reach the lower temperature stretch end of the central part 98. The pressurised air is turned off just before stretching is completed and, after a preset delay, mainblow air at a higher pressure is introduced (Figure 5d). The high pressure air used to blow a component is thus achieved in two stages, identified as "pre-blow" which lies in the range from 60 psi to 135 psi (4 to 9 bar) and "main-blow" which lies in the range from 150 psi to 200 psi (10 to 14 bar) for straight walled articles and up to 600 psi (40 bar) for shaped articles. Close control of the preblow pressure, preferably to within 1 psi, is required to achieve a good blown component. The mainblow air achieves accurate conformity of the article with the mould.

Finally, the finished article is released from the mould and passed for cutting and heatsetting if required.

The dwell time in the oven and the precise temperature of the tube varies depending on the material grade and dimensions of the tube.

In one example the dwell time is 4.16 minutes and the average temperature of the tube lies between 95°C and 105°C with a difference of 6°C between the ends of the tube as it emerges from the oven.

The thickness and diameter of the blown article can be calculated from the following:

In one example:

A preform has a mean diameter = 21mm and is blown into a finished article with an outer diameter = 84mm. The transverse stretch ratio is $\lambda_2 = 4$.

The transverse stretch ratio $\lambda_2$ of the finished article is given by

$$\lambda_2 = \frac{A+B}{a+b} \simeq \frac{2B}{a+b}$$

where a is the inner preform radius, b is the outer preform radius, A is the inner radius of the blown article and B in the outer radius of the blown article.

In another example:

a preform with a thickness 4mm is blown into a finished article with a mean thickness 0.36mm and has a thickness reduction ratio $\lambda_t = 11.11$.

The thickness reduction ratio $\lambda_t$ of the finished article is given by

$$\lambda_t = \frac{b-a}{B-A}$$

where b-a is the thickness of the preform, B-A is the mean thickness of the finished article.

The repeatability of the stretch/blow process is dependent upon close control of the section of the preform at which propagation of the plastics material begins when pressurised air is introduced. Inflation of the preform here is encouraged in the described embodiment by the creation of a hot area. The present inventors have found that by creating this hot area close to the end of the tube into which pressurised air is introduced, advance of the work hardening front within the PET from that end to the opposite end occurs at a controlled and repeatable rate.

The present inventors have found that by permitting the material itself to adopt its natural stretch dynamics, a more consistent product of high quality can be produced. The natural stretch rate of the material is far faster than could be applied by mechanical means alone, and can exceed 5 metres per second.

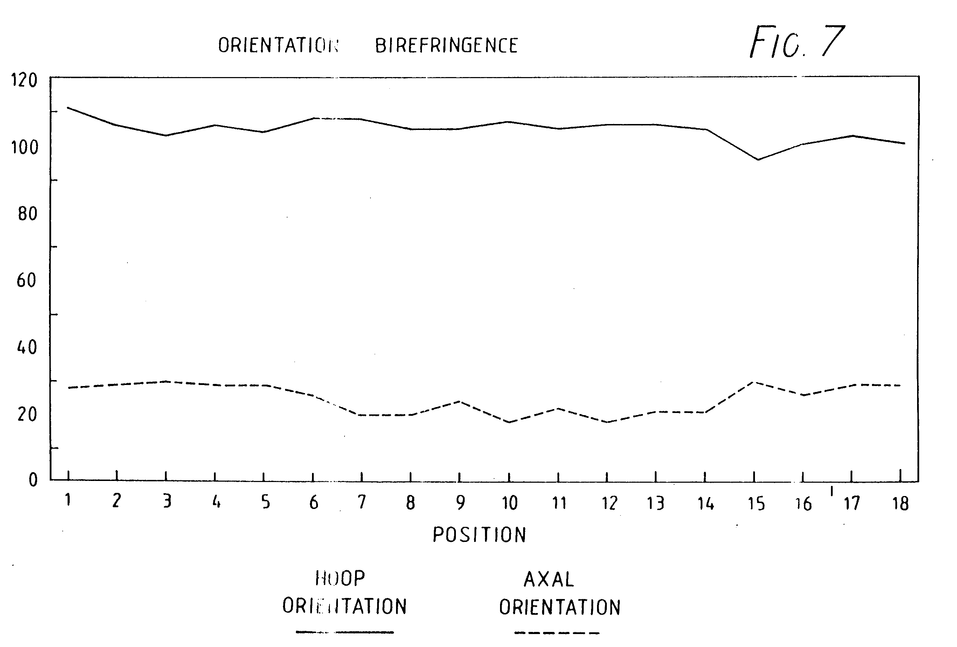

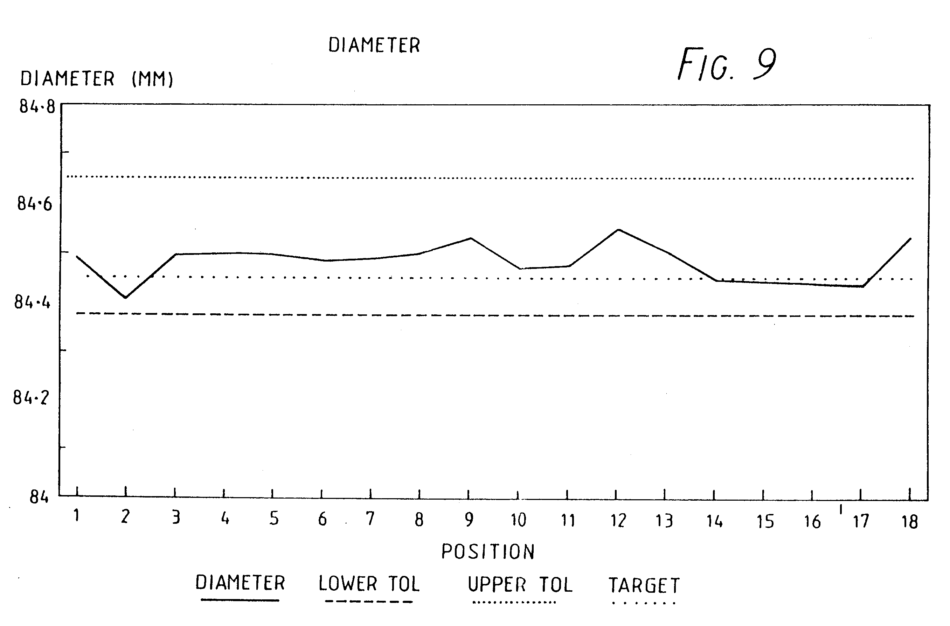

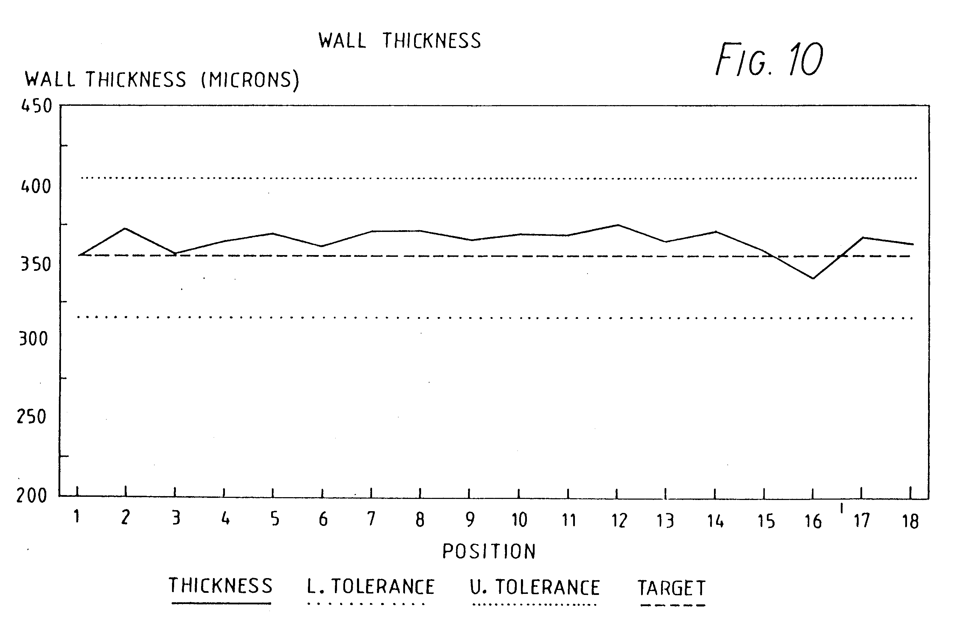

Examples of the characteristics of products produced by the described process are shown in Figures 7 to 10. Figure 7 shows the orientation characteristics as the birefringence in the axial and hoop directions. These are calculated from the refractive indices in the respective directions.

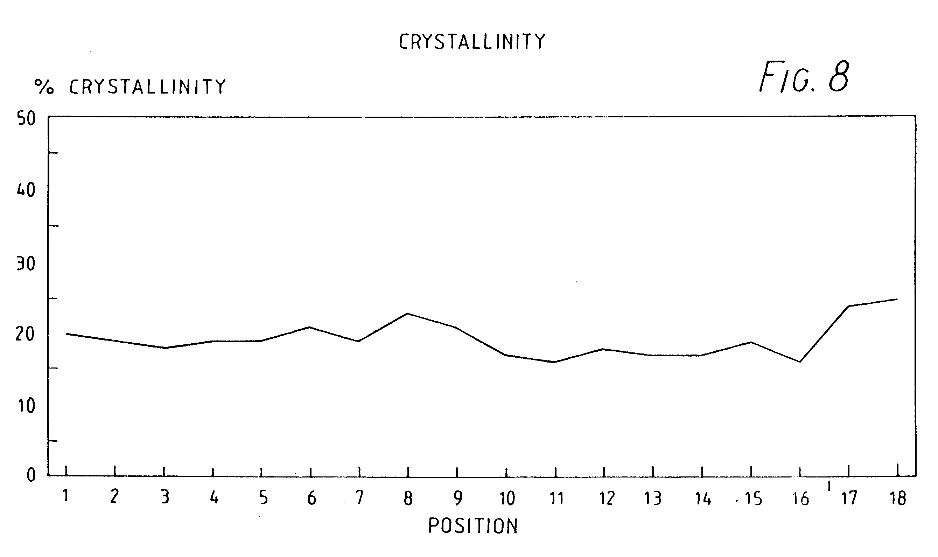

Figure 8 shows the crystallinity as calculated from density measurements at 20°C.

$$\% \ \text{Crystallinity } Xc \ = \ \frac{p \ - \ pa}{pc \ - \ pa} \ x \ 100$$

where

P = measured density
pa = amorphous density
pc = crystalline density

**Claims**

1. A method of manufacturing a thermoplastic tubular article from a hollow elongate parison of an orientable polymer material in the manufacture of open-ended container bodies, which comprises gripping end portions of the preform to define between them a central portion from which the article is to be formed, and moving the end portions apart whilst admitting gas at a controlled pressure to the interior of the preform, such movement and admission of gas causing the central portion to be biaxially oriented by simultaneous elongation and radial expansion of its polymer material, characterised in that prior to its biaxial orientation the polymer material of the central portion is heated to above its glass transition temperature and so as to produce in the central portion a temperature gradient which extends, without discontinuities, between the ends of the central portion, the elongation and the radial expansion of the central portion to achieve biaxial orientation being thereby each initiated at the higher temperature end of the central portion and proceeding progressively and simultaneously as an expansion front which moves along the central portion from its higher temperature end to its lower temperature end.

2. A method according to claim 1, in which a work hardened front is formed in the polymer material and accompanies the expansion front as it moves along the central portion.

3. A method according to claim 1 or claim 2, characterised in that the preform is heated prior to the gripping of the end portions and to the elongation and radial expansion of the central portion.

4. A method according to any preceding claim, characterised in that during biaxial orientation of the central portion its higher temperature end is held stationary, and its lower temperature end is moved away from the higher temperature end longitudinally of the preform.

5. A method according to any preceding claim, characterised in that during the biaxial orientation of the central portion the pressurised gas is admitted through its higher temperature end only.

6. A method according to any preceding claim, arranged to produce long biaxially orientated articles using polyethylene terephthalate as the polymer material, characterised in that the temperature difference betweeen the higher and lower temperature ends of the central portion is at least 3°C.

7. A method according to any preceding claim, characterised in that the central portion is elongated and radially expanded within a chilled mould, the pressurised gas being admitted at a first, pressure for biaxially orienting said polymer, and, subsequent to expansion of most but not all of the central portion into contact with the mould, at a second, higher pressure for conforming said article with the mould.

8. Apparatus for producing a thermoplastic tubular article from a hollow elongate preform of an orientable polymer material which comprises:-
   a) first and second spaced gripping means (13, 14) for gripping respective end portions of the preform so as to define a central portion of the preform from which the article is to be formed;
   b) heating means (4) for heating the preform;
   c) drive means (15) operable on the gripping means with the heated preform held thereby to move the gripping means apart longitudinally of the preform; and

7

EP 0 434 277 B1

d) gas pressure supply means (19) effective to supply gas at a controlled pressure to the interior of the heated preform during the operation of the drive means whereby the polymer material of the central portion is biaxially orientated by simultaneous elongation and radial expansion;
<u>characterised in that</u> the heating means comprises means for differentially heating the central portion along its length thereby the polymer material of the central portion is heated to above its glass transition temperature, and whereby there is produced in the central portion a temperature gradient which extends, without discontinuities, between the ends of the central portion.

9.   Apparatus according to claim 8, characterised in that the heating means is an oven (4) through which the preform (1) is carried along a predetermined path, the oven having a plurality of parallel elongate nozzles (30) arranged adjacent the predetermined path and by which heated gas is directed onto the preform (1), the nozzles being differentially closed off so as in combination to create the said temperature gradient on the preform.

## Patentansprüche

1.   Verfahren zum Herstellen eines rohrförmigen thermoplastischen Gegenstands aus einem hohlen langgestreckten Vorformling aus einem orientierbaren Polymermaterial für die Herstellung von Behälterkörpern mit offenen Enden, welches umfaßt: Greifen der Endabschnitte des Vorformlings, um zwischen denselben einen Mittelabschnitt zu bilden, aus welchem der Gegenstand geformt werden soll, und Auseinanderbewegen der Endabschnitte, während Gas unter einem gesteuerten Druck ins Innere des Vorformlings eingeleitet wird, wobei dieses Bewegen und Einleiten von Gas den Mittelabschnitt veranlaßt, sich durch gleichzeitiges Verlängern und radiales Expandieren seines Polymermaterials biaxial zu orientieren, dadurch gekennzeichnet, daß das Polymermaterial des Mittelabschnitts vor seiner biaxialen Orientierung auf eine Temperatur oberhalb seiner Glasübergangstemperatur derart erhitzt wird, daß im Mittelabschnitt ein Temperaturgradient erzeugt wird, der zwischen den Enden des Mittelabschnitts ohne Diskontinuitäten verläuft, wobei die Verlängerung und die radiale Expansion des Mittelabschnitts zur Erzielung einer biaxialen Orientierung dadurch jeweils an dem Ende des Mittelabschnitts mit der höheren Temperatur ausgelöst wird und zunehmend und gleichzeitig als eine Expansionsfront fortschreitet, die sich längs des Mittelabschnitts von dessen Ende mit der höheren Temperatur zu dem Ende mit der niedrigeren Temperatur bewegt.

2.   Verfahren nach Anspruch 1, bei welchem eine kaltgehärtete Front im Polymermaterial gebildet wird und die Expansions front begleitet, wenn sie sich längs des Mittelabschnitts bewegt.

3.   Verfahren nach Anspruch 1 oder 2, dadurch gekennzeichnet, daß der Vorformling vor dem Ergreifen der Endabschnitte und der Verlängerung und radialen Expansion des Mittelabschnitts erhitzt wird.

4.   Verfahren nach einem der vorangehenden Ansprüche, dadurch gekennzeichnet, daß während der biaxialen Orientierung des Mittelabschnitts dessen Ende mit der höheren Temperatur feststehend gehalten wird, und dessen Ende mit der niedrigeren Temperatur von dem Ende mit der höheren Temperatur in Längsrichtung des Vorformlings wegbewegt wird.

5.   Verfahren nach einem der vorangehenden Ansprüche, dadurch gekennzeichnet, daß während der biaxialen Orientierung des Mittelabschnitts das Druckgas nur durch dessen Ende mit der höheren Temperatur eingeleitet wird.

6.   Verfahren nach einem der vorangehenden Ansprüche, bei welchem lange biaxial orientierte Gegenstände unter Verwendung von Polyethylenterephtalat als Polymermaterial erzeugt werden, dadurch gekennzeichnet, daß die Temperaturdifferenz zwischen den Enden des Mittelabschnitts mit höherer bzw. niedrigerer Temperatur mindestens 3°C beträgt.

7.   Verfahren nach einem der vorangehenden Ansprüche, dadurch gekennzeichnet, daß der Mittelabschnitt in einer gekühlten Form verlängert und radial expandiert wird, wobei das Druckgas unter einem ersten Druck zum biaxialen Orientieren des Polymers eingeleitet wird, und nachfolgend zur Expansion des größten Teils, jedoch nicht des ganzen Mittelabschnitts, in die Berührung mit der Form unter einem zweiten höheren Druck zum Anformen des Gegenstandes an die Form eingeleitet wird.

**8.** Vorrichtung zum Herstellen eines rohrförmigen thermoplastischen Gegenstandes aus einem hohlen langgestreckten Vorformling aus einem orientierbaren Polymermaterial, welche aufweist:

(a) im Abstand voneinander angeordnete erste und zweite Greifeinrichtungen (13,14) zum Greifen der jeweiligen Endabschnitte des Vorformlings derart, daß ein Mittelabschnitts des Vorformlings gebildet wird, aus welchem der Gegenstand geformt werden soll;

(b) Heizeinrichtungen (4) zum Erhitzen des Vorformlings;

(c) eine Antriebseinrichtung (15) zum Antreiben der Greifeinrichtungen mit dem dadurch gehaltenen erhitzten Vorformling, um die Greifeinrichtungen in Längsrichtung des Vorformlings auseinanderzubewegen; und

(d) eine Druckgaszuführeinrichtung (19) zum Zuführen von Gas unter einem gesteuerten Druck ins Innere des erhitzten Vorformlings während des Betriebs der Antriebseinrichtung, wodurch das Polymermaterial des Mittelabschnitts durch gleichzeitiges Verlängern und radiales Expandieren biaxial orientiert wird;

dadurch gekennzeichnet, daß die Heizeinrichtungen aus Einrichtungen zum unterschiedlichen Erhitzen des Mittelabschnitts entlang seiner Längserstreckung bestehen, wodurch das Polymermaterial des Mittelabschnitts auf eine Temperatur oberhalb seiner Glasübergangstemperatur erhitzt wird, und wobei im Mittelabschnitt ein Temperaturgradient erzeugt wird, der ohne Diskontinuitäten zwischen den Enden des Mittelabschnitts verläuft.

**9.** Vorrichtung nach Anspruch 8, dadurch gekennzeichnet, daß die Heizeinrichtungen aus einem Ofen (4) bestehen, durch welchen der Vorformling (1) längs eines vorbestimmten Weges geführt wird, wobei der Ofen eine Anzahl von parallelen langgestreckten Düsen (30) aufweist, die neben dem vorbestimmten Weg angeordnet sind und durch die erhitztes Gas auf den Vorformling (1) gerichtet wird, und wobei die Düsen unterschiedlich abgesperrt werden, so daß sie zusammen den erwähnten Temperaturgradienten am Vorformling erzeugen.

**Revendications**

**1.** Procédé pour fabriquer un article tubulaire thermoplastique à partir d'une préforme allongée creuse d'un matériau polymère orientable, dans la fabrication de corps de récipients ouverts aux deux extrémités, qui comprend les phases consistant à : saisir les portions d'extrémité de la préforme pour définir entre elles une portion centrale à partir de laquelle l'article doit être formé, et écarter les portions d'extrémité tout en admettant un gaz à une pression contrôlée à l'intérieur de la préforme, un tel mouvement et une telle admission de gaz amenant la portion centrale à être orientée biaxialement par allongement et dilatation radiale simultanés de son matériau polymère, caractérisé en ce qu'avant son orientation biaxiale le matériau polymère de la portion centrale est chauffé à une température supérieure à sa température de transition vitreuse et de manière à produire, dans la portion centrale, un gradient de température qui s'étend, ininterrompu, entre les extrémités de la portion centrale, l'allongement et la dilatation radiale de la portion centrale pour obtenir l'orientation biaxiale étant ainsi amorcés à l'extrémité à la plus haute température de la portion centrale et se poursuivant progressivement et simultanément en un front de dilatation qui se déplace le long de la portion centrale de son extrémité à la plus haute température à son extrémité à la plus basse température.

**2.** Procédé selon la revendication 1, dans lequel un front d'écrouissage est formé dans le matériau polymère et accompagne le front de dilatation dans son déplacement le long de la portion centrale.

**3.** Procédé selon la revendication 1 ou 2, caractérisé en ce que la préforme est chauffée avant la préhension des portions d'extrémité et l'allongement et la dilatation radiale de la portion centrale.

**4.** Procédé selon l'une quelconque des revendications précédentes, caractérisé en ce que durant l'orientation biaxiale de la portion centrale son extrémité à la plus haute température est maintenue fixe, et son extrémité à la plus basse température est éloignée de l'extrémité à la plus haute température dans le sens de la longueur de la préforme.

**5.** Procédé selon l'une quelconque des revendications précédentes, caractérisé en ce que durant l'orientation biaxiale de la portion centrale le gaz sous pression est admis via son extrémité à la plus haute température uniquement.

6. Procédé selon l'une quelconque des revendications précédentes, prévu pour produire des articles orientés biaxialement longs en utilisant du polytéréphtalate d'éthylène comme matériau polymère, caractérisé en ce que la différence de température entre les extrémités à la plus haute température et à la plus basse température de la portion centrale est d'au moins 3°.

7. Procédé selon l'une quelconque des revendications précédentes, caractérisé en ce que la portion centrale est allongée et dilatée radialement au sein d'un moule refroidi, le gaz sous pression étant admis à une première pression pour orienter biaxialement ledit polymère, puis, après la dilatation de la majeure partie mais non la totalité de la portion centrale en contact avec le moule, à une seconde pression plus élevée pour que ledit article épouse le moule.

8. Appareil pour fabriquer un article tubulaire thermoplastique à partir d'une préforme allongée creuse d'un matériau polymère orientable, qui comprend :

a) un premier et un second moyens de préhension espacés (13, 14) pour saisir les portions d'extrémité respectives de la préforme de manière à définir une portion centrale de la préforme à partir de laquelle l'article doit être formé;

b) un moyen de chauffage (4) pour chauffer la préforme;

c) un moyen d'entraînement (15) agissant sur les moyens de préhension avec la préforme chauffée maintenue afin d'écarter les moyens de préhension dans le sens de la longueur de la préforme; et

d) un moyen de distribution de pression de gaz (19) servant à distribuer un gaz à une pression contrôlée à l'intérieur de la préforme chauffée durant le fonctionnement du moyen d'entraînement de sorte que le matériau polymère de la portion centrale soit orienté biaxialement par allongement et dilatation radiale simultanés;

caractérisé en ce que : le moyen de chauffage comprend un moyen pour chauffer différentiellement la portion centrale sur sa longueur de sorte que le matériau polymère de la portion centrale soit chauffé à une température supérieure à sa température de transition vitreuse et que soit produit dans la portion centrale un gradient de température qui s'étend, ininterrompu, entre les extrémités de la portion centrale.

9. Appareil selon la revendication 8, caractérisé en ce que le moyen de chauffage est un four (4) à travers lequel la préforme (1) est acheminée le long d'une trajectoire prédéterminée, le four comportant une pluralité de buses allongées parallèles (30) adjacentes à la trajectoire prédéterminée et par lesquelles le gaz chauffé est dirigé sur la préforme (1), les buses étant fermées différentiellement de manière à créer conjointement ledit gradient de température sur la préforme.

FIG.1

FIG. 2

FIG. 3

FIG. 4

FIG. 5a

FIG. 5b

FIG. 5c

PREBLOW AIR

EP 0 434 277 B1

Fig. 5d
AIR VALVE OPEN

Fig. 5e
VALVE CLOSED

Fig. 5f
MAIN BLOW PRESSURE

TEMPERATURE GRADIENT ALONG THE TUBE   *FIG. 6a*

TEMPERATURE °C

DISTANCE FROM STATIC END (MM).

EP 0 434 277 B1

TEMPERATURE GRADIENT ALONG THE TUBE

FIG. 6b

TEMPERATURE °C

DISTANCE FROM STATIC END (MM).

EP 0 434 277 B1

ORIENTATION BIREFRINGENCE

FIG. 7

POSITION

HOOP
ORIENTATION

AXAL
ORIENTATION

EP 0 434 277 B1

CRYSTALLINITY

% CRYSTALLINITY

FIG. 8

POSITION

EP 0 434 277 B1

DIAMETER

*FIG. 9*

DIAMETER (MM)

POSITION

DIAMETER      LOWER TOL      UPPER TOL      TARGET

EP 0 434 277 B1

WALL THICKNESS

FIG. 10

WALL THICKNESS (MICRONS)

POSITION

THICKNESS        L. TOLERANCE        U. TOLERANCE        TARGET

EP 0 434 277 B1